# EUROPÄISCHE PATENTANMELDUNG

(11) **EP 4 730 593 A1**
(43) Veröffentlichungstag der Anmeldung: **22.04.2026**
(21) Anmeldenummer: 24207719.6
(22) Anmeldetag: 21.10.2024
(51) Int. Cl.: H02J 7/00

(54) **VERFAHREN ZUM KONTROLLIERTEN ENTLADEN EINES AKKUMULATORS AUF EINEN BESTIMMTEN LADUNGSWERT**

(71) Anmelder: Hilti Aktiengesellschaft, 9494 Schaan (LI)
(72) Erfinder: Guggemos, Andreas, 86825 Bad Wörishofen (DE)
(74) Vertreter: Hilti Aktiengesellschaft Corporate Intellectual Property

(57) **Zusammenfassung**

Verfahren zum Steuern und Regeln eines Akkumulator, insbesondere als Energieversorgung für eine Werkzeugmaschine, enthaltend ein Akku-Gehäuse, eine Akku-Schnittstelle, eine Steuereinheit und eine Anzahl an Energiespeicherelementen, wobei die Steuereinheit wenigstens eine Erfassungseinrichtung zum Erfassen wenigstens eines Ladungswerts enthält.

Akkumulator, insbesondere als Energieversorgung für eine Werkzeugmaschine, zur Durchführung des Verfahrens.

System enthaltend einen Akkumulator und wenigstens eine Eingabevorrichtung zur Durchführung des Verfahrens.

## Beschreibung

Die vorliegende Erfindung betrifft ein Verfahren zum Steuern und Regeln eines Akkumulator, insbesondere als Energieversorgung für eine Werkzeugmaschine, enthaltend ein Akku-Gehäuse, eine Akku-Schnittstelle, eine Steuereinheit und eine Anzahl an Energiespeicherelementen, wobei die Steuereinheit wenigstens eine Erfassungseinrichtung zum Erfassen wenigstens eines Ladungswerts enthält.

Des Weiteren betrifft die vorliegende Erfindung einen Akkumulator, insbesondere als Energieversorgung für eine Werkzeugmaschine, zur Durchführung des erfindungsgemäßen Verfahrens, enthaltend ein Akku-Gehäuse, eine Akku-Schnittstelle, eine Speichereinheit, eine Steuereinheit und eine Anzahl an Energiespeicherelementen, wobei die Steuereinheit wenigstens eine Erfassungseinrichtung zum Erfassen wenigstens eines Ladungswerts enthält

Darüber hinaus betrifft die vorliegende Erfindung ein System enthaltend einen Akkumulator mit wenigstens einem Energiespeicherelement und wenigstens eine Eingabevorrichtung zur Durchführung des erfindungsgemäßen Verfahrens.

Akkumulatoren als wiederlösbare Energieversorgung für Werkzeugmaschinen sind weitestgehend bekannt. Zur Anzeige der Füllmenge der in einem Akkumulator gespeicherten elektrischen Energie bzw. elektrischen Ladung weisen einige auf dem Markt erhältliche Akkumulatoren eine entsprechende Anzeigevorrichtung auf. Oftmals sind diese Anzeigevorrichtungen in Form einer Bargraph-Anzeige (auch Balken- oder Bandanzeige genannt) an dem Gehäuse eines Akkumulators verwirklicht. Problematisch ist an derartigen Anzeigevorrichtungen eine genaue bzw. präzise Darstellung der tatsächlich in dem jeweiligen Akkumulator gespeicherten Energie bzw. Ladung (auch State of Charge (SoC) genannt).

Wenn beispielsweise für eine Reparatur, Servicemaßnahme und/oder Testverfahren es notwendig ist, dass eine ganz bestimmte Energie- oder Ladungsmenge in dem vorliegenden Akkumulator gespeichert ist, kann dies mit Hilfe der auf dem Markt erhältlichen Akkuanzeigevorrichtungen nur sehr ungenau oder gar nicht erreicht werden.

Es ist damit Aufgabe der vorliegenden Erfindung das vorstehend beschriebene Problem zu lösen.

Die Aufgabe wird gelöst durch den Gegenstand des unabhängigen Patentanspruchs 1, 4 und 14.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch ein Verfahren zum Steuern und Regeln eines Akkumulator, insbesondere als Energieversorgung für eine Werkzeugmaschine, enthaltend ein Akku-Gehäuse, eine Akku-Schnittstelle, eine Steuereinheit und eine Anzahl an Energiespeicherelementen, wobei die Steuereinheit wenigstens eine Erfassungseinrichtung zum Erfassen wenigstens eines Ladungswerts enthält.

Erfindungsgemäß sind die Verfahrensschritte vorgesehen
- Aussenden wenigstens eines Signals von einer Eingabevorrichtung an die wenigstens eine Erfassungseinrichtung zum Erfassen wenigsten eines ersten Ladungswerts;
- Einrichten wenigstens eines Energieaufnahmeelements in einen Aktivierungsmodus, sodass von dem wenigstens einen Energieaufnahmeelement elektrische Energie aus den Energiespeicherelementen bezogen wird, wenn der wenigstens eine erfasste Ladungswert mindestens einen in der Speichereinheit hinterlegten Schwellwert übersteigt;
- Erfassen wenigsten eines zweiten Ladungswerts durch die Erfassungseinrichtung; und
- Einrichten des wenigstens einen Energieaufnahmeelements in einen Deaktivierungsmodus, sodass von dem wenigstens einen Energieaufnahmeelement keine elektrische Energie aus den Energiespeicherelementen bezogen wird, wenn der wenigstens zweite Ladungswert den wenigstens Schwellwert unterschreitet.

Der Bezug elektrischer Energie aus den Energiespeicherelementen kann als ein Entladevorgang bzw. Entladen der Energiespeicherelemente bezeichnet werden.

Der Ladungswert kann auch als State of Charge (SoC) oder Amperestundenwert (Ah) bezeichnet werden.

Der Ladungswert kann sich dabei über die Gesamtspannung des Akkumulators oder über die Summe der Spannungswerte der einzelnen Energiespeicherelemente definieren. Des Weiteren kann sich der Ladungswert auch über die Kapazitätsbestimmung wie u. a. Coulomb Counting definieren.

Der Schwellwert kann dabei beispielsweise 30% des OCV (= Open Circuit Voltage) betragen. Es ist jedoch auch möglich, dass der Schwellwert höher oder niedriger als 30% des OCV ist. Hierbei ist es besonders vorteilhaft, wenn der Schwellwert maximal 29% des OCV beträgt. Es ist insbesondere möglich, dass der Schwellwert in einem Bereich von 10 bis 40% des OCV liegt. Der Schwellwert kann auch beispielsweise 30% des SoC (State-of-Charge) betragen. Generell ist es möglich, dass der Schwellwert frei wählbar ist.

Die Energiespeicherelemente können auch als Energiezellen, Energiespeicherzellen, Akku-Zellen oder Zellen bezeichnet werden.

Einrichten eines Energieaufnahmeelements bedeutet, dass ein Energieaufnahmeelement zum Aufnehmen elektrischer Energie aktiviert wird oder dass ein Energieaufnahmeelement zum Aufnehmen elektrischer Energie mit dem Akkumulator verbunden wird. Durch das bloße Verbindung des Energieaufnahmeelements mit dem Akkumulator kann auch ohne Betätigen der Eingabevorrichtung das Verfahren zum Erfassen des Ladungswerts des Akkumulators und dann ggf. das entsprechende Entladen des Akkumulators auf einen bestimmten Schwellwert beginnen.

Entsprechend einer vorteilhaften Ausführungsform kann der Verfahrensschritt enthalten sein:
- Einstellen des Akkumulators in einen Sperrmodus, sodass keine elektrische Energie von den Energiespeicherelementen aufgenommen werden kann, wenn der wenigstens zweite Ladungswert den wenigstens Schwellwert unterschreitet.

Gemäß einer weiteren vorteilhaften Ausführungsform kann es möglich sein, dass elektrische Energie mit einer vorbestimmten Entladungsrate von dem wenigstens einen Energieaufnahmeelement aus den Energiespeicherelementen bezogen wird. Hierdurch ist es möglich, dass

Entsprechend einer weiteren vorteilhaften Ausführungsform kann es möglich sein, dass die Entladungsrate, mit welcher das wenigstens eine Energieaufnahmeelement elektrische Energie aus den Energiespeicherelementen bezieht, abhängig ist von dem Wert, mit dem der erste erfasste Ladungswert den Schwellwert übersteigt. Mit anderen Worten: je höher der erste erfasste Ladungswert ist bzw., je mehr der erste erfasste Ladungswert den Schwellwert übersteigt, desto größer ist die Entnahme der Energiemenge durch das Energieaufnahmeelement aus den Energiespeicherelemente. Alternativ ist der Entladungsvorgang der Energiespeicherelemente durch das Energieaufnahmeelement umso schneller, je mehr der erste erfasste Ladungswert den Schwellwert übersteigt.

Des Weiteren wird die Aufgabe gelöst durch einen Akkumulator, insbesondere als Energieversorgung für eine Werkzeugmaschine, zur Durchführung des erfindungsgemäßen Verfahrens, enthaltend ein Akku-Gehäuse, eine Akku-Schnittstelle, eine Speichereinheit, eine Steuereinheit und eine Anzahl an Energiespeicherelementen, wobei die Steuereinheit wenigstens eine Erfassungseinrichtung zum Erfassen wenigstens eines Ladungswerts enthält.

Gemäß einer vorteilhaften Ausführungsform kann es möglich sein, dass das wenigstens eine Energieaufnahmeelement in Form wenigstens eines Bauteils der Steuereinheit des Akkumulators verwirklicht ist.

Entsprechend einer weiteren vorteilhaften Ausführungsform kann es möglich sein, dass das wenigstens eine Energieaufnahmeelement in Form einer Signalausgabeeinrichtung verwirklicht ist. Bei der Signalausgabeeinrichtung kann es sich um eine Lichteinheit handeln.

Das Energieaufnahmeelement kann dabei als Verbraucher elektrischer Energie oder als Energiespeicher ausgestaltet sein.

Gemäß einer weiteren vorteilhaften Ausführungsform kann es möglich sein, dass das wenigstens eine Energieaufnahmeelement in Form wenigstens elektrischen Widerstandselements verwirklicht ist. Bei dem Widerstandselement kann es sich in einer speziellen Ausführungsform auch um ein MOSFET (Metall-Oxid-Halbleiter-Feldeffekttransistor) als elektrisches Lastelement handeln.

Des Weiteren kann das Energieaufnahmeelement als Speicher elektrischer Energie ausgestaltet sein. Gemäß einer vorteilhaften Ausführungsform ist das Energieaufnahmeelement in Form einer Energiespeicherzelle oder Akkuzelle mit einer Lithium-Ionen-Technik ausgestaltet. Generell kann das Energieaufnahmeelement als Sekundärzelle bezeichnet werden.

Entsprechend einer weiteren vorteilhaften Ausführungsform kann es möglich sein, dass das wenigstens eine Energieaufnahmeelement in Form mindestens eines Bestandteils einer externen Vorrichtung, die wiederlösbar mit dem Akkumulator verbunden werden kann, verwirklicht ist. Bei der externen Vorrichtung kann es sich eine Werkzeugmaschine, eine Ladevorrichtung mit einer Entladevorrichtung, eine Lampe oder dergleichen handeln. Die Entladevorrichtung kann dabei als reine Entladevorrichtung ausgestaltet sein.

Gemäß einer weiteren vorteilhaften Ausführungsform kann es möglich sein, dass die Eingabevorrichtung wenigstens teilweise in Form einer an dem Akku-Gehäuse verwirklicht ist. Die Benutzerschnittstelle kann auch als Benutzungsschnittstelle, Nutzerschnittstelle, User Interface oder MMI (Man-Machine-Interface) bezeichnet werden.

Entsprechend einer weiteren vorteilhaften Ausführungsform kann es möglich sein, dass die Eingabevorrichtung wenigstens teilweise in Form einer drahtgebundenen oder drahtlosen Signalübertragungseinrichtung verwirklicht ist. Die Signalübertragungseinrichtung kann dabei auf RFID, Bluetooth, NFC (Near Field Communication), W-LAN basieren. Darüber hinaus kann die Signalübertragungseinrichtung auch auf einer optischen Signalübertragung, z.B. Infrarot, Licht im Allgemeinen oder dergleichen, basieren.

Gemäß einer weiteren vorteilhaften Ausführungsform kann es möglich sein, dass die Eingabevorrichtung wenigstens teilweise in Form einer mit dem Akkumulator verbindbaren Ladevorrichtung verwirklicht ist. Eine derartige Ladevorrichtung kann auch als Entladevorrichtung bezeichnet werden und enthält dabei eine Entladefunktion, mit der elektrische Energie von den Energiespeicherelementen genommen werden kann. Die Eingabevorrichtung enthält dabei wenigstens ein Eingabeelement zum Aussenden eines elektrischen Signals.

Entsprechend einer weiteren vorteilhaften Ausführungsform kann es möglich sein, dass die Eingabevorrichtung wenigstens teilweise in Form einer mit dem Akkumulator verbindbaren Werkzeugmaschine verwirklicht ist. Die Eingabevorrichtung enthält dabei wenigstens ein Eingabeelement zum Aussenden eines elektrischen Signals.

Gemäß einer weiteren vorteilhaften Ausführungsform kann es möglich sein, dass die Eingabevorrichtung wenigstens teilweise in Form eines mit dem Akkumulator verbindbaren Mobilgeräts verwirklicht ist. Bei dem Mobilgerät kann es sich beispielhaft um ein Smartphone handeln. Zur Übertragung von elektrischen Signalen enthält die Eingabevorrichtung sowie der Akkumulator jeweils wenigstens einen Transceiver.

Darüber hinaus wird die Aufgabe gelöst durch ein System enthaltend einen Akkumulator mit wenigstens einem Energiespeicherelement und wenigstens eine Eingabevorrichtung zur Durchführung des erfindungsgemäßen Verfahrens.

Erfindungsgemäß ist vorgesehen, dass wenigstens ein externes Energieaufnahmeelement zur Reduzierung des Ladezustands der Energiespeicherelemente mit dem Akkumulator verbindbar ist.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine seitliche Schnittansicht durch eine Werkzeugmaschine in Form eines Akku-Schraubers mit einem Akkumulator zur Energieversorgung;
- Figur 2: eine Schnittansicht durch den Akkumulator;
- Figur 3: eine seitliche Schnittansicht durch den Akkumulator in Verbindung mit einer ersten externen Vorrichtung;
- Figur 4: eine seitliche Schnittansicht durch den Akkumulator in Verbindung mit einer zweiten externen Vorrichtung; und
- Figur 5: eine seitliche Schnittansicht durch den Akkumulator in Verbindung mit einer Ladevorrichtung.

### Ausführungsbeispiele:

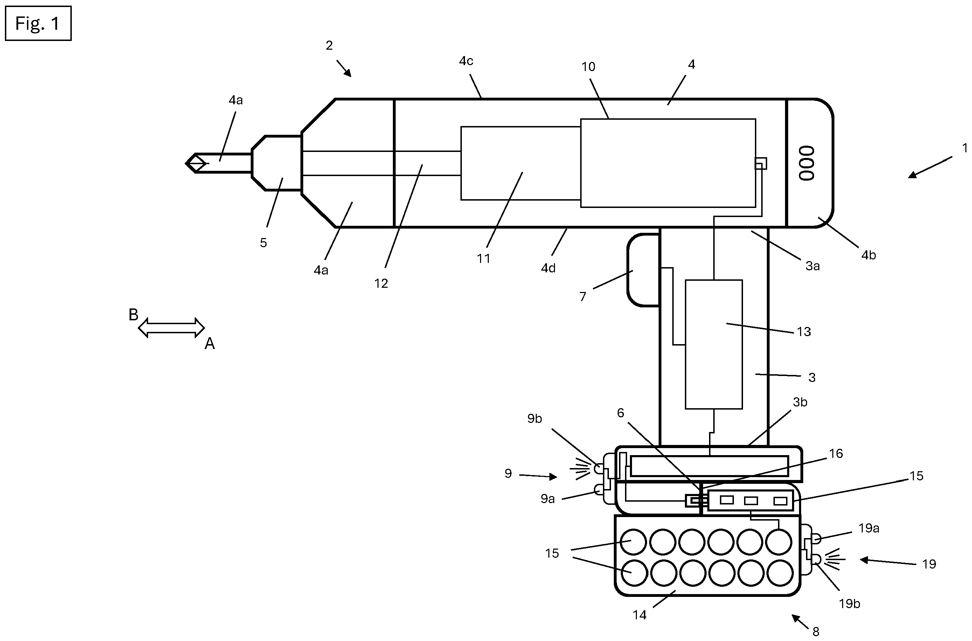

In Figur 1 ist eine Werkzeugmaschine 2 und einem Akkumulator 8 gezeigt.

Die in Figur 1 dargestellte Werkzeugmaschine 2 ist gemäß einer beispielhaften Ausführungsform in Form eines Akku-Schraubers ausgestaltet.

Gemäß einem alternativen Ausführungsbeispiel kann die Werkzeugmaschine 2 auch in Form einer Säge, eines Schleifgeräts, eines Bohrhammers oder dergleichen ausgestaltet sein. Alternativ kann die Werkzeugmaschine auch in Form einer Leuchte verwirklicht sein.

Die als Akku-Schrauber ausgestaltete Werkzeugmaschine 2 enthält dabei im Wesentlichen ein Gehäuse 4, einen Handgriff 5 und eine Werkzeugaufnahme 5.

Das Gehäuse 4 weist ein vorderes Ende 4a, ein hinteres Ende 4b, ein oberes Ende 4c und ein unteres Ende 4d auf.

An dem vorderen Ende 4a des Gehäuses 4 ist die Werkzeugaufnahme 5 positioniert.

Die Werkzeugaufnahme 5 dient zum Aufnehmen und Halten eines Werkzeugs 5a. In dem beispielhaften Ausführungsbeispiel ist das Werkzeug 5a als Schrauberbit ausgestaltet.

An dem unteren Ende 4d des Gehäuses 4 ist ein erstes Ende 5a des Handgriffs 5 positioniert. An dem zweiten Ende 5b des Handgriffs 5 ist eine Schnittstelle 6 vorgesehen.

Wie in Figur 1 ebenfalls gezeigt weist der Handgriff 5 an einer Vorderseite einen Aktivierungsschalter 7 auf, mit dem die Werkzeugmaschine 2 in einen Aktivierungszustand oder Deaktivierungszustand eingestellt werden kann. Durch Drücken des Aktivierungsschalters 7 in Pfeilrichtung A wird die Werkzeugmaschine 2 aktiviert.

An die Schnittstelle 6 kann eine Energieversorgung 8, beispielsweise ein Akkumulator, wiederlösbar befestigt werden.

Die Schnittstelle 6 der Werkzeugmaschine 2 enthält dabei einen Pluskontakt, einen Minuskontakt sowie einen Kommunikationskontakt. An den jeweiligen Pluskontakt, Minuskontakt sowie Kommunikationskontakt sind in einem verbundenen Zustand entsprechende Plus-, Minus- und Kommunikationsleitungen der Energieversorgung 8 wiederlösbar befestigt.

Eine Eingabevorrichtung 9 ist an einer Vorderseite der Schnittstelle 6 der Werkzeugmaschine 2 positioniert. Die Eingabevorrichtung 9 kann als Benutzerschnittstelle bezeichnet werden und enthält eine Taste 9a sowie eine Signalausgabeeinrichtung 9b.

Die Taste 9a kann auch als Drücker oder Schalter bezeichnet werden.

Wie nachher noch im Detail beschrieben dient die Signalausgabeeinrichtung 9b zur Durchführung von verschiedenen Funktionen. Zum einen wird durch die Signalausgabeeinrichtung 9b nach Betätigen der Taste 9a angezeigt, dass sich der Akkumulator 8 in einem Zustand befindet, in dem der Ladezustand des Akkumulators 8 erfasst wird. Zum anderen wird angezeigt, dass sich der Akkumulator 8 in einem Entladungszustand bis zum Erreichen eines Schwellwert befindet. Des Weiteren wird durch die Signalausgabeeinrichtung 9b ein Zustand des Akkumulators 8 angezeigt, wenn der Ladungswert des Akkumulators 8 den Schwellwert erreicht oder sogar unterschritten hat. Das jeweilige Anzeigen der unterschiedlichen Zustände wird dabei durch entsprechende Signalausgabesequenzen oder -frequenzen (bzw. Signalfolgen) angezeigt.

Eine Signalausgabe mit 90 Hz zeigt den Zustand des Erfassens des aktuellen Ladezustands des Akkumulators 8 an. Eine Signalausgabe mit 50 Hz zeigt den Zustand des Entladens des Akkumulators 8 an. Ein dauerhaftes Leuchten der Signalausgabeeinrichtung 9b zeigt das Erreichen oder Unterschreiten des Ladungsschwellwerts des Akkumulators 8 an.

Alternativ ist das Signalausgabeeinrichtung 9b in Form eines Displays ausgestaltet. Der Ladungszustand bzw. der Ladungswert des Akkumulators 8 ist auf dieser als Displays ausgestalteten Signalausgabeeinrichtung 9b in Prozenten bzw. als prozentualer Wert (%) dargestellt.

In der vorliegenden Ausführungsform ist die Signalausgabeeinrichtung 9b in Form einer LED-Leuchte ausgestaltet.

Gemäß einer alternativen Ausführungsform kann die Eingabevorrichtung 9 auch mehr als eine Taste und mehr als eine LED-Leuchte enthalten.

Alternativ kann auch eine Eingabevorrichtung 9 an der Werkzeugmaschine 2 vorgesehen sein, die keine separate Taste 9a an der Eingabevorrichtung 9 enthält, sondern bei der die Funktion der separaten Taste 9a durch den Aktivierungsschalter 7 erfüllt wird.

In dem vorliegenden Ausführungsbeispiel ist die Energieversorgung 8 in Form eines einzelnen Akkumulators ausgestaltete. Alternativ kann auch mehr als ein einziger Akkumulator als Energieversorgung 8 der Werkzeugmaschine 2 vorgesehen sein.

Die Energieversorgung 8 dient zum Versorgen der Werkzeugmaschine 2 und insbesondere der elektrischen Verbraucher der Werkzeugmaschine 2 mit elektrischer Energie.

Im Inneren des Gehäuses 4 ist im Wesentlichen einen Antrieb 10 in Form eines Elektromotors, eine Getriebevorrichtung 11, eine Antriebswelle 12 und eine Steuereinrichtung 13 positioniert. Der Antrieb 10, die Steuereinrichtung 13 und einzelne Bestandteile der Steuereinrichtung 13 können jeweils als Energieaufnahmeelement elektrischer Energie in Form eines Verbrauchers bezeichnet werden. Das Signalausgabeeinrichtung 9b dient dabei auch als Verbraucher elektrischer Energie.

Der als Elektromotor ausgestaltete Antrieb 10, die Getriebevorrichtung 11, die Antriebswelle 12 und die Werkzeugaufnahme 5 sind so im Inneren des Gehäuses 4 zueinander angeordnet, dass ein in dem Elektromotor 10 erzeugtes Drehmoment auf die Getriebevorrichtung 11, die Antriebswelle 12 und schließlich auf die Werkzeugaufnahme 5 bzw. auf das in der Werkzeugaufnahme 5 enthaltende Werkzeug 5a übertragen werden kann.

Der als Elektromotor ausgestaltete Antrieb 10 ist in Form eines bürstenlosen Gleichstrommotors ausgebildet.

Die Steuereinrichtung 13 dient zum Steuern und Regeln der verschiedenen Funktionen der Werkzeugmaschine 2. Zu den Funktionen gehört beispielsweise die Drehzahl des Antriebs 10 oder die Regelung und Steuerung der Aufnahme elektrischer Energie von der Energieversorgung 8.

Die Eingabevorrichtung 9 an der Vorderseite der Schnittstelle 6 der Werkzeugmaschine 2 ist über eine Leitung mit der Steuereinrichtung 13 verbunden, sodass elektrische Signale gesendet und empfangen werden können.

Die als Akkumulator ausgestaltete Energieversorgung 8 kann mit der Werkzeugmaschine 2 wiederlösbar verbunden werden, um die Werkzeugmaschine 2 mit elektrischer Energie zu versorgen.

Der Akkumulator 8 enthält im Wesentlichen ein Akku-Gehäuse 14, eine Anzahl an Energiespeicherelementen 15, eine Akku-Schnittstelle 16, eine Speichereinheit 17, eine Erfassungseinrichtung 18 zum Erfassen von Ladungswerten, eine Eingabevorrichtung 19 sowie eine Steuereinheit 20.

Die Energiespeicherelemente 15 können auch als Akku-Zellen, Zellen oder Energiespeicherzellen bezeichnet werden und sind im Inneren des Akku-Gehäuses 14 angeordnet.

Das Akku-Gehäuse 14 enthält dabei im Wesentlichen ein Deckelelement 14a, eine vordere Wandseite 14b, eine hintere Wandseite 14c, eine erste und zweite Seitenschale 14d, 14e und ein Bodenelement 14f.

Die Akku-Schnittstelle 16 ist an der Außenseite des Deckelelements 14a angeordnet und dient zum elektrischen bzw. elektronischen sowie mechanischen Verbinden des Akkumulators 8 mit beispielsweise der Werkzeugmaschine 2 oder einer Ladevorrichtung 21.

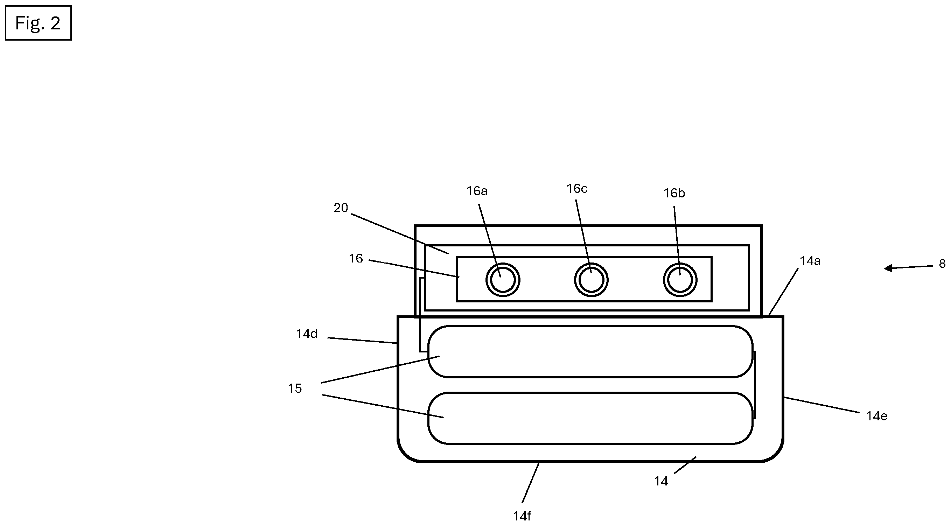

Zum elektrischen bzw. elektronischen Verbinden weist die Akku-Schnittstelle 16 einen Pluskontakt 16a, einen Minuskontakt 16b und einen Kommunikationskontakt 16c auf, vgl. Figur 2.

Die Akku-Schnittstelle 16 ist mit der Schnittstelle 6 der Werkzeugmaschine 2 so verbindbar, dass jeweils die Plus- und Minuskontakte 16a, 16b des Akkumulators 8 und der Werkzeugmaschine 2 miteinander verbindbar sind. Darüber hinaus sind die Kommunikationskontakte 16c des Akkumulators 8 und der Werkzeugmaschine 2 miteinander verbindbar.

Der Plus- und Minuskontakt dient zur Erzeugen eines Stromkreises, wenn der Akkumulator 8 mit einer Werkzeugmaschine 2 oder einer Ladevorrichtung 21 verbunden ist. Der Kommunikationskontakt 16c dient zum Senden und Empfangen von Daten sowie Informationen in Form von elektrischen Signalen.

Alternativ oder zusätzlich zu dem Kommunikationskontakt 14c kann der Akkumulator 5 auch eine Funkkommunikation (z.B. Bluetooth) bzw. drahtlose Kommunikation enthalten.

Die Energiespeicherelemente 16 dienen zum Aufnehmen, Speichern und erneuten Abgeben elektrischer Energie.

Die Energiespeicherelemente 16 sind in zylindrischer Form sowie auf Basis einer Lithium-Ionen-Technologie ausgestaltet.

Jedes Energiespeicherelement 16 enthält an einem Ende eine Kontakteinrichtung, die zur Übertragung elektrischer Energie dient. Die einzelnen Kontakteinrichtung sind über entsprechende Leitungen mit der Steuereinheit 17 des Akkumulators 8 verbunden.

Alternativ können die Energiespeicherelemente 16 auch auf einer anderen geeigneten Technologie basieren.

Die zylindrische Form der Energiespeicherelemente 16 ist ebenfalls optional, sodass auch jede andere geeignete Form bzw. Geometrie gewählt werden kann. So ist es insbesondere auch möglich, dass die Energiespeicherelemente 16 als Pouchzellen ausgestaltet sind.

Es ist zudem auch möglich, dass der Akkumulator 8 sowohl zylindrische Energiespeicherelemente 16 als auch Pouch-Zellen enthält. Es ist insbesondere möglich, dass der Akkumulator 8 lediglich ein einziges zylindrisches Energiespeicherelement 16 und eine einzige Pouchzelle enthält.

Die Steuereinheit 16 des Akkumulators 8 regelt und steuert verschiedene Funktionen des Akkumulators 8. Zu den Funktion gehört unter anderen die Steuerung der Aufnahme und Abgabe von elektrischer Energie in bzw. aus den Energiespeicherelementen 16.

Darüber hinaus wird mit Hilfe der Steuereinheit 17 die Menge an elektrischer Energie gesteuert, die von den Energiespeicherelementen 16 aufgenommen oder abgegeben werden sollen.

In den Figuren ist eine Ausführungsform des Akkumulators 8 mit einer Eingabevorrichtung 19 an einer hinteren Wandseite 14c gezeigt. Die Eingabevorrichtung 19 kann auch an einer anderen Stelle des Akku-Gehäuses 14 positioniert sein.

Die in den Figuren gezeigte Eingabevorrichtung 19, welche an dem Akku-Gehäuse 14 positioniert ist, enthält eine Taste 19a sowie eine Signalausgabeeinrichtung 19b.

Die Taste 9a kann auch als Drücker oder Schalter bezeichnet werden.

In der vorliegenden Ausführungsform ist die Signalausgabeeinrichtung 19b in Form einer LED-Leuchte ausgestaltet. Gemäß einer alternativen Ausführungsform kann die Eingabevorrichtung 19 auch mehr als eine Taste und mehr als eine LED-Leuchte enthalten.

Die Eingabevorrichtung 19 ist über eine Leitung mit der Steuereinheit 17 des Akkumulators 8 verbunden, sodass elektrische Signale gesendet und empfangen werden können.

Die Eingabevorrichtung 19 des Akkumulators 8 ist im Aufbau sowie Funktion im Wesentlichen identisch mit der Eingabevorrichtung 9 der Werkzeugmaschine 2.

Wie nachher noch im Detail beschrieben und ähnlich zu der Eingabevorrichtung 9 der Werkzeugmaschine 2 dient die Signalausgabeeinrichtung 19 des Akkumulators 8 zur Durchführung von verschiedenen Funktionen. Zum einen wird durch die Signalausgabeeinrichtung 19b nach Betätigen der Taste 19a angezeigt, dass sich der Akkumulator 8 in einem Zustand befindet, in dem der Ladezustand des Akkumulators 8 erfasst wird. Zum anderen wird angezeigt, dass sich der Akkumulator 8 in einem Entladungszustand bis zum Erreichen eines Schwellwert befindet. Des Weiteren wird durch die Signalausgabeeinrichtung 19b ein Zustand des Akkumulators 8 angezeigt, wenn der Ladungswert des Akkumulators 8 den Schwellwert erreicht oder sogar unterschritten hat. Das jeweilige Anzeigen der unterschiedlichen Zustände wird dabei durch entsprechende Signalausgabesequenzen oder -frequenzen (bzw. Signalfolgen) angezeigt.

Eine Signalausgabe mit 90 Hz zeigt den Zustand des Erfassens des aktuellen Ladezustands des Akkumulators 8 an. Eine Signalausgabe mit 50 Hz zeigt den Zustand des Entladens des Akkumulators 8 an. Ein dauerhaftes Leuchten der Signalausgabeeinrichtung 19b zeigt das Erreichen oder Unterschreiten des Ladungsschwellwerts des Akkumulators 8 an.

Alternativ ist das Signalausgabeeinrichtung 9b in Form eines Displays ausgestaltet. Der Ladungszustand bzw. der Ladungswert des Akkumulators 8 ist auf dieser als Displays ausgestalteten Signalausgabeeinrichtung 19b in Prozenten bzw. als prozentualer Wert (%) dargestellt.

In der vorliegenden Ausführungsform ist die Signalausgabeeinrichtung 19b in Form einer LED-Leuchte ausgestaltet.

Gemäß einer alternativen Ausführungsform kann die Eingabevorrichtung 19 auch mehr als eine Taste und mehr als eine LED-Leuchte enthalten.

Die Erfassungseinrichtung 18 dient zum Erfassen von Ladungswerten eines Energiespeicherelementes 16, einer Mehrzahl an Energiespeicherelemente 16 oder allen Energiespeicherelementen 16 des Akkumulators 8. Der Ladungswert kann dabei auch als elektrische Ladung, Kapazität, Amperestundenwert (oder nur Amperestunde (Ah)), Ladungszustand, State of Charge (SoC) bezeichnet werden.

Die Erfassungseinrichtung 18 kann auch als Senor oder Sensoreinrichtung bezeichnet werden. Die Erfassungseinrichtung 18 kann dabei mehr als einen Sensor enthalten.

Werte und Daten, die von der Erfassungsvorrichtung 18 erfasst werden, werden in der Speichereinheit 17 des Akkumulators 8 gespeichert.

Darüber hinaus sind in der Speichereinheit 17 verschiedene Look-Up-Tabellen und Schwellwerte mit einem jeweiligen Bezug auf die von der Erfassungseinrichtung erfassbaren Daten und Werte gespeichert.

Gemäß einem vorteilhaften Ausführungsbeispiel enthält der Akkumulator 8 ein Energieaufnahmeelement 24 in Form eines zusätzlichen Verbrauchers elektrischer Energie. In diesem Zusammenhang ist dieser zusätzliche Verbraucher 24 als ein Bauteil oder Vorrichtung zu verstehen, durch welchen lediglich elektrische Energie verbraucht bzw. umgewandelt wird. Alternativ kann auch mehr als ein zusätzlicher Verbraucher 24 elektrischer Energie in dem Akkumulator 8 vorgesehen sein. Der wenigstens eine zusätzliche Verbraucher 8 ist in einem Ausführungsbeispiel in Form eines oder mehrerer MOSFETs verwirklicht. Alternativ kann der zusätzliche Verbraucher 8 auch als ein oder mehrere elektrische Widerstandelemente verwirklicht sein.

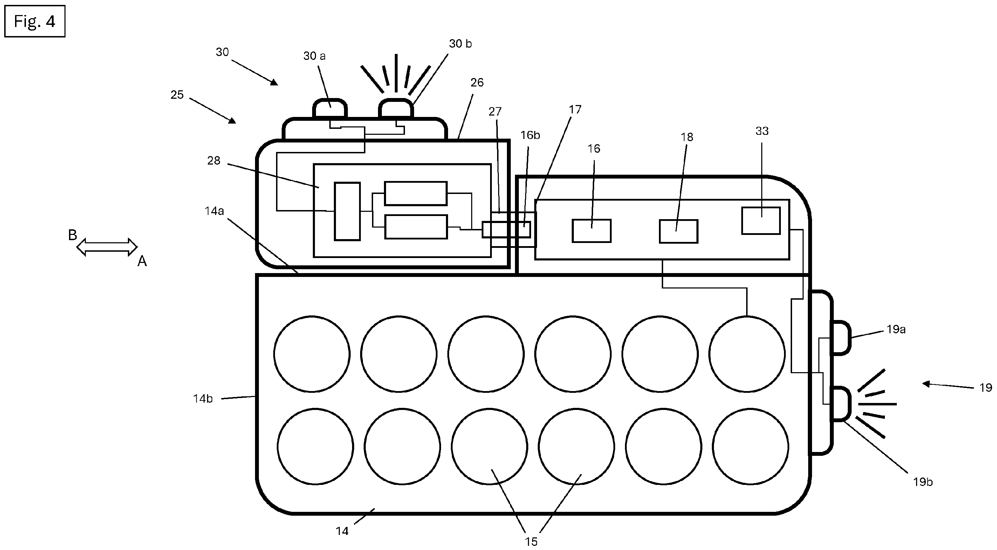

Entsprechend einer weiteren vorteilhaften Ausführungsform ist in Figur 4 ein System 1 bestehend aus einem Akkumulator 8 und einer externe Vorrichtung 25 gezeigt. Die externe Vorrichtung 25 ist über die Akku-Schnittstelle 16 mit dem Akkumulator 8 wiederlösbar verbunden.

Die externe Vorrichtung 25 enthält hierzu ein Gehäuse 26 mit einer Schnittstelle 27 an einer Gehäuseseite. Durch diese Schnittstelle 27 kann die externe Vorrichtung 25 über die Akku-Schnittstelle 16 mit dem Akkumulator 8 verbunden werden. Im Inneren des Gehäuses 26 ist ein elektrischer Widerstand 24a positioniert, der über eine Leitung mit der Schnittstelle 27 verbunden ist. Über diese Leitung kann elektrische Energie von dem Akkumulator 8 an die externe Vorrichtung 25 gelangen.

Gemäß einer weiteren vorteilhaften Ausführungsform enthält die externe Vorrichtung 25 neben dem als elektrischer Widerstand 24a ausgestaltete Verbraucher 24 zusätzlich ein Energiespeicherelement 24b. Der Widerstand 24a und das Energiespeicherelement 24b sind Bestandteile der externen Vorrichtung 25. Das Energiespeicherelement 24b ist dabei in Form einer Akkuzelle ausgestalte und dient zum Aufnehmen sowie Speichern elektrischer Energie. Die externe Vorrichtung 24 enthält des Weiteren eine Steuereinheit 29 zum Steuern und Regeln von Funktionen der Vorrichtung 25. Zu den Funktionen gehört unter anderem das Erfassen des Ladungszustands (= State-of.Charge (SoC)) eines angeschlossenen Akkumulators 8 sowie die Bewertung, ob und in welcher Menge elektrische Energie von dem Akkumulator 8 entnommen werden soll. Zum Erfassen eines Ladezustands des Akkumulators 8 enthält die externe Vorrichtung 25 eine entsprechende Erfassungseinrichtung 28 zum Erfassen von Ladungswerten.

Des Weiteren wird durch die Steuereinheit 29 entschieden, ob die von dem Akkumulator 8 entnommene Energie durch den Verbraucher 24 verbraucht oder in dem Energiespeicherelement 24b gespeichert werden soll. Wie in Figur 4 angedeutet, enthält die externe Vorrichtung 25 an einer Gehäuseseite eine Eingabevorrichtung 30, welche wiederum eine Taste 30a sowie eine Signalausgabeeinrichtung 30a enthält. Die Eingabevorrichtung 30 ist über entsprechende Leitungen mit der Steuereinheit 29 verbunden.

Die Ausgestaltung sowie Funktionsweise der Eingabevorrichtung 30 der externen Vorrichtung 25 ähnelt dabei im Wesentlichen der Ausgestaltung und Funktionsweise der Eingabevorrichtung 9 der Werkzeugmaschine bzw. der Eingabevorrichtung 19 des Akkumulators 8.

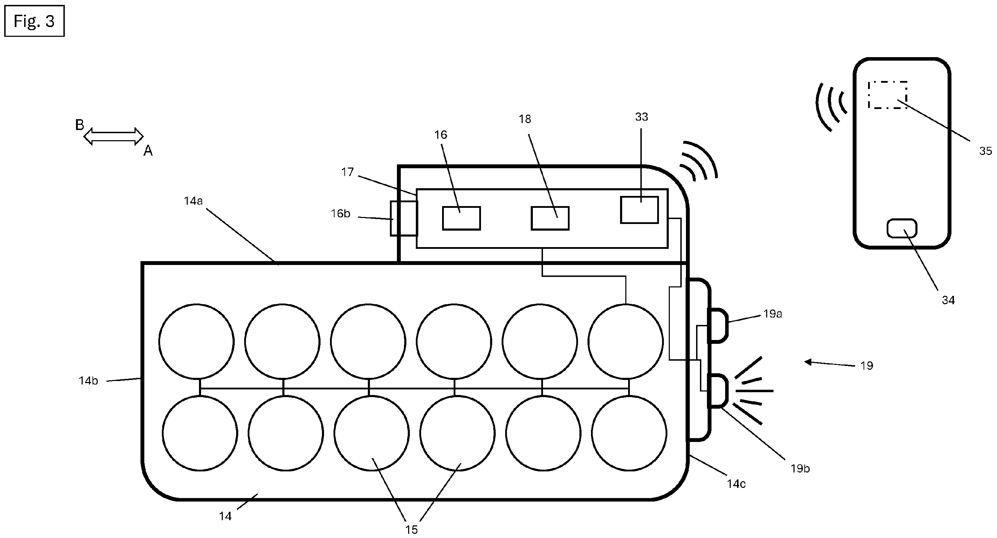

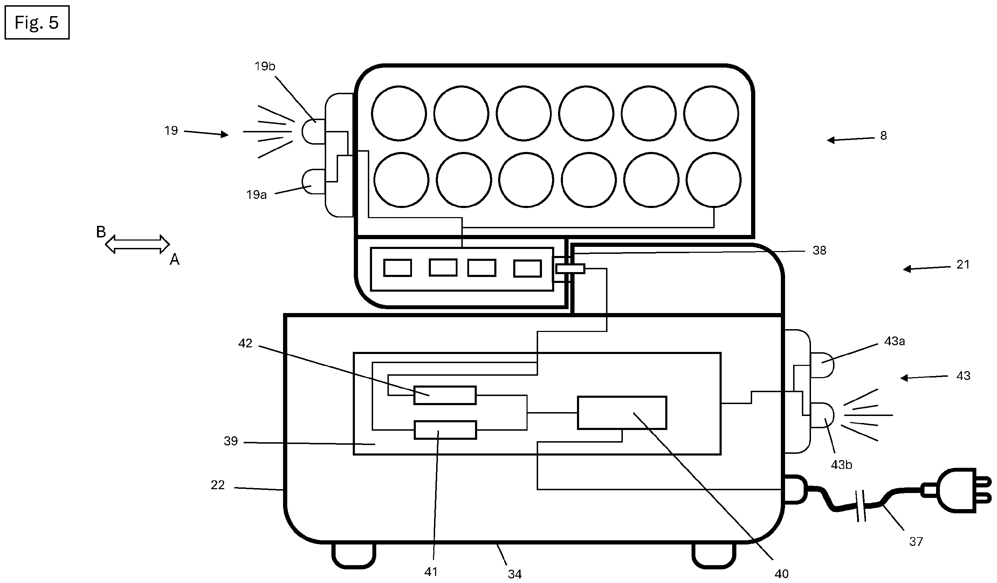

Gemäß einem weiteren vorteilhaften Ausführungsbeispiel enthält der Akkumulator 8 einen Transceiver 33 zum Senden und Empfangen von Informationen und Daten in Form von elektrischen Signalen. Der Transceiver 33 dient zum Kommunizieren mit einer externen Vorrichtung 25 und ist in dem vorliegenden Ausführungsbeispiel in Form eines Blue Tooth-Moduls ausgestaltete, vgl. Figur 2. Bei der externen Vorrichtung 25 kann es sich um ein Smartphone, eine Ladevorrichtung 21, eine Werkzeugmaschine 2, einen anderen Akkumulator 8 oder dergleichen handeln. Beispielsweise ist in Figur 3 ist eine externe Vorrichtung 25 in Gestalt eines Smartphones und in Figur 5 in Gestalt einer Ladevorrichtung 21 gezeigt. Die externe Vorrichtung 25 in Form eines Smartphones kann auch als Mobilgerät bezeichnet werden.

Wie in Figur 3 dargestellt ist der Transceiver 33 des Akkumulators 8 zum drahtlosen Aussenden und Empfangen von elektrischen Signalen ausgestaltet. In dem vorliegenden Ausführungsbeispiel ist der Transceiver 33 dabei als Blue-Tooth-Modul ausgestaltet. Alternativ kann der Transceiver 33 auch als eigenständiges GSM/LTE/(2/2.5/3G/4G/5G (LTE)- Modul ausgestaltete sein.

Wie in Figur 3 angedeutet, befindet sich der Akkumulator 8 in Funkverbindung mit einem Smartphone 25. Neben den üblichen Funktionen und Einrichtungen eines Smartphones 25, weist das in diesem Ausführungsbeispiel gezeigte Smartphone 25 zusätzliche eine Eingabevorrichtung 34 auf, mit der gezielt elektrische Signale an den Akkumulator 8 gesendet werden können. Wie später im Detail beschrieben, können diese von der externen Vorrichtung 25 ausgesandten elektrischen Signale zum Steuern und Regeln einzelner Funktionen des Akkumulators 8 dienen. Des Weiteren können auf dem Smartphone 25 verschiedene Daten und Werte, die von dem Akkumulator 8 mit Hilfe des Transceivers 33 an das Smartphone 25 gesendet wurden, angezeigt und/oder beeinflusst werden. Ein Speichern dieser Daten und Werte ist ebenfalls auf einem Speicher 35 des Smartphones 25 möglich.

Figur 5 zeigt einen Akkumulator 8, der wiederlösbar mit einer Ladevorrichtung 21 verbunden ist. Die Ladevorrichtung 21 enthält dabei ein Gehäuse 36, einen Netzstecker 37, eine Schnittstelleneinrichtung 38, eine Steuereinheit 39, eine Speichereinheit 40, ein Energieaufnahmeelement 41, eine Erfassungseinrichtung 42 zum Erfassen von Ladungswerten eines angeschlossenen Akkumulators 8 sowie eine Eingabevorrichtung 43.

Die Steuereinheit 39 dient zum Steuern und Regeln der verschiedenen Funktionen der Ladevorrichtung 21. Zu den Funktionen gehört unter anderen das Zuführen und auch die Entnahme von elektrischer Energie zu bzw. aus einem mit der Ladevorrichtung 21 verbundenen Akkumulator 8. Die Steuereinheit 39 ist über entsprechende Leitungen mit der Schnittstelleneinrichtung 38, der Eingabevorrichtung 43 und dem Netzstecker 37 verbunden. Die Eingabevorrichtung 43 ist an einer Seitenwand des Gehäuses 36 der Ladevorrichtung 21 positioniert und enthält eine Taste 43a sowie eine Signalausgabeeinrichtung 43b. Die Eingabevorrichtung 43 ist über entsprechende Leitungen mit der Steuereinheit 39 der Ladevorrichtung 21 verbunden.

In der vorliegenden Ausführungsform ist die Signalausgabeeinrichtung 45 in Form einer LED-Leuchte ausgestaltet. Gemäß einer alternativen Ausführungsform kann die Eingabevorrichtung 45 auch mehr als eine Taste und mehr als eine LED-Leuchte enthalten.

Die Ausgestaltung sowie Funktionsweise der Eingabevorrichtung 43 der Ladevorrichtung 21 ähnelt wiederum im Wesentlichen der Ausgestaltung und Funktionsweise der Eingabevorrichtung 9 der Werkzeugmaschine bzw. der Eingabevorrichtung 19 des Akkumulators 8.

Das Energieaufnahmeelement 24 ist als Verbraucher elektrischer Energie ausgestaltet und insbesondere als elektrisches Widerstandselement. Alternativ kann die Energieaufnahmeelement 24 auch als Speicher für elektrische Energie ausgestaltet sein. Für diese Ausführungsform ist der Speicher als Akku-Zelle ausgestaltet.

Das erfindungsgemäße Verfahren kann lediglich mit dem Akkumulator 8 allein durchgeführt werden, oder wenn der Akkumulator 8 entweder mit der Werkzeugmaschine 2, einer externen Vorrichtung 25 (z.B. Smartphone) oder der Ladevorrichtung 21 verbunden ist.

Gemäß einer ersten Ausführungsform weist der Akkumulator 8 eine eigene Eingabevorrichtung 19 an dem Akku-Gehäuse 14 auf.

Zur Durchführung des erfindungsgemäßen Verfahrens wird die Taste 19a der Eingabevorrichtung 19 in Pfeilrichtung B gedrückt, wodurch ein elektrisches Signal von der Eingabevorrichtung 19 an Erfassungseinrichtung 18 gesendet wird. Die Erfassungseinrichtung 18 erfasst daraufhin den aktuellen Ladungswert (= SoC) der Energiespeicherzellen 16 des Akkumulators 8. Gemäß diesem Ausführungsbeispiel ist die Signalausgabeeinrichtung 19b der des Akkumulators 8 als LED-Leuchte ausgestaltet.

Das Erfassen des aktuellen Ladungswerts wird durch das Blinken der LED-Leuchte mit einer Frequenz von 90 Hz angezeigt.

Mit Hilfe der Steuereinheit 20 wird der erfasste aktuelle Ladungswert der Energiespeicherzellen 16 des Akkumulators 8 mit einem Schwellwert verglichen. Gemäß diesem Ausführungsbeispiel beträgt der Schwellwert 30% des OCV (= Open Circuit Voltage) und ist in der Speichereinheit 17 des Akkumulators 8 hinterlegt.

Wenn der erfasste Ladungswert diesen Schwellwert übersteigt (d.h. erfasste Ladungswert > 30% OCV) wird mit Hilfe der Steuereinheit 20 das Energieaufnahmeelement 24 in einen Aktivierungsmodus eingerichtet. In diesem Ausführungsbeispiel ist das Energieaufnahmeelement 24 in Form eines elektrischen Widerstandselements ausgestaltet, welches über entsprechende Leitungen mit den Energiespeicherelementen 16 verbunden ist. Elektrische Energie wird mit Hilfe des elektrischen Widerstands aus den Energiespeicherelementen 16 entnommen bzw. das elektrische Widerstandselement wandelt die elektrische Energie der Energiespeicherelementen 16 in thermische Energie (= Wärme oder Wärmeenergie) um. Mit anderen Worten: die Energiespeicherelemente 16 bzw. der Akkumulator 8 entlädt sich durch den als Widerstand ausgestalteten Verbraucher.

Das Entladen der Energiespeicherelemente 16 wird durch das Blinken der LED-Leuchte mit einer Frequenz von 50 Hz angezeigt.

Alternativ kann der Schwellwert auch mehr oder weniger als 30% des OCV betragen.

Anschließend wird erneut der Ladungswert der Energiespeicherzellen 16 erfasst und mit dem Schwellwert verglichen. Gemäß diesem Ausführungsbeispiel wird das erneute Erfassen des aktuellen Ladungswerts durch das Blinken der LED-Leuchte mit einer Frequenz von 90 Hz angezeigt.

Das Erfassen des aktuellen Ladungswert der Energiespeicherelemente 16 erfolgt dabei in regelmäßigen zeitlichen Abständen. In diesem Ausführungsbeispiel beträgt der zeitliche Abstand zwischen zwei Erfassungsvorgängen 10 Sekunden. Die zeitlichen Abstände können jedoch auch größer oder kleiner als 10 Sekunden sein.

Wenn der weitere erfasste Ladungswert dem Schwellwert entspricht oder niedriger als der Schwellwert ist, wird das Energieaufnahmeelement 16 in einen Deaktivierungsmodus eingerichtet, sodass keine weitere elektrische Energie von den Energiespeicherzellen 16 durch das Energieaufnahmeelement 16 entnommen wird.

Das Erreichen des Ladungsschwellwerts für die Energieaufnahmeelemente 16 wird durch ein dauerhaftes Aufleuchten der als LED-Leuchte ausgestalteten Signalausgabeeinrichtung 19b angezeigt. Nach einer Zeitdauer von 20 Sekunde wird dann das dauerhafte Aufleuchten der LED-Leuchte beendet.

### Bezugszeichen

- 1: System
- 2: Werkzeugmaschine
- 4: Gehäuse der Werkzeugmaschine
- 4a: vorderes Ende des Gehäuses
- 4b: hinteres Ende des Gehäuses
- 4c: oberes Ende des Gehäuses
- 4d: unteres Ende des Gehäuses
- 5: Werkzeugaufnahme
- 6: Schnittstelle der Werkzeugmaschine
- 7: Aktivierungsschalter der Werkzeugmaschine
- 8: Akkumulator
- 9: Eingabevorrichtung der Werkzeugmaschine
- 9a: Taste der Eingabevorrichtung
- 9b: Signalausgabeeinrichtung der Eingabevorrichtung
- 10: Antrieb
- 11: Getriebevorrichtung
- 12: Antriebswelle
- 13: Steuereinrichtung der Werkzeugmaschine
- 14: Akku-Gehäuse
- 14a: Deckelelement des Akku-Gehäuses
- 14b: vordere Wandseite des Akku-Gehäuses
- 14c: hintere Wandseite des Akku-Gehäuses
- 14d: erste Seitenschale des Akku-Gehäuses
- 14e: zweite Seitenschale des Akku-Gehäuses
- 14f: Bodenelement des Akku-Gehäuses
- 15: Energiespeicherelement des Akkumulators
- 16: Akku-Schnittstelle
- 16a: Pluskontakt der Akku-Schnittstelle
- 16b: Minuskontakt der Akku-Schnittstelle
- 16c: Kommunikationskontakt der Akku-Schnittstelle
- 17: Speichereinheit des Akkumulators
- 18: Erfassungseinrichtung des Akkumulators
- 19: Eingabevorrichtung des Akkumulators
- 19a: Taste der Eingabevorrichtung des Akkumulators
- 19b: Signalausgabeeinrichtung der Eingabevorrichtung des Akkumulators
- 20: Steuereinheit des Akkumulators
- 21: Ladevorrichtung
- 24: Energieaufnahmeelement des Akkumulators
- 24a: elektrischer Widerstand der externen Vorrichtung
- 24b: Energiespeicherelement der der externen Vorrichtung
- 25: externe Vorrichtung
- 26: Gehäuse der externen Vorrichtung
- 27: Schnittstelle der externen Vorrichtung
- 29: Steuereinheit der externen Vorrichtung
- 30: Eingabevorrichtung der externen Vorrichtung
- 30a: Taste der Eingabevorrichtung der externen Vorrichtung
- 30b: Signalausgabeeinrichtung der Eingabevorrichtung der externen Vorrichtung
- 33: Transceiver des Akkumulators
- 34: Eingabevorrichtung der externen Vorrichtung
- 35: Speicher der externen Vorrichtung
- 36: Gehäuse der Ladevorrichtung
- 37: Netzstecker
- 38: Schnittstelleneinrichtung
- 39: Steuereinheit
- 40: Speichereinheit
- 41: Energieaufnahmeelement
- 42: Erfassungseinrichtung
- 43: Eingabevorrichtung
- 43a: Taste der Eingabevorrichtung der Ladevorrichtung
- 43b: Signalausgabeeinrichtung der Eingabevorrichtung der Ladevorrichtung

## Patentansprüche

1. Verfahren zum Steuern und Regeln eines Akkumulator (8), insbesondere als Energieversorgung für eine Werkzeugmaschine (2), enthaltend ein Akku-Gehäuse (14), eine Akku-Schnittstelle (16), eine Speichereinheit (17), eine Steuereinheit (20) und eine Anzahl an Energiespeicherelementen (15), wobei die Steuereinheit (20) wenigstens eine Erfassungseinrichtung (18) zum Erfassen wenigstens eines Ladungswerts enthält, **gekennzeichnet durch** die Verfahrensschritte
- Aussenden wenigstens eines Signals von einer Eingabevorrichtung (19, 30, 34, 43) an die wenigstens eine Erfassungseinrichtung (18) zum Erfassen wenigsten eines ersten Ladungswerts;
- Einrichten wenigstens eines Energieaufnahmeelements (24, 41) in einen Aktivierungsmodus, sodass von dem wenigstens einen Energieaufnahmeelement (24, 41) elektrische Energie aus den Energiespeicherelementen (15) bezogen wird, wenn der wenigstens eine erfasste Ladungswert mindestens einen in der Speichereinheit (17) hinterlegten Schwellwert übersteigt;
- Erfassen wenigsten eines zweiten Ladungswerts durch die Erfassungseinrichtung (18); und
- Einrichten des wenigstens einen Energieaufnahmeelements (24, 41) in einen Deaktivierungsmodus, sodass von dem wenigstens einen Energieaufnahmeelement (24, 41) keine elektrische Energie aus den Energiespeicherelementen (15) bezogen wird, wenn der wenigstens zweite Ladungswert den wenigstens Schwellwert unterschreitet.

2. Verfahren nach Anspruch 1,
**gekennzeichnet durch** den Verfahrensschritt
- Einstellen des Akkumulators (8) in einen Sperrmodus, sodass keine elektrische Energie von den Energiespeicherelementen (15) aufgenommen werden kann, wenn der wenigstens zweite Ladungswert den wenigstens Schwellwert unterschreitet.

3. Verfahren nach Anspruch 1,
**dadurch gekennzeichnet, dass** elektrische Energie mit einer vorbestimmten Entladungsrate von dem wenigstens einen Energieaufnahmeelement (24, 41) aus den Energiespeicherelementen (15) bezogen wird.

4. Verfahren nach Anspruch 1,
**dadurch gekennzeichnet, dass** die Entladungsrate, mit welcher der wenigstens eine Energieaufnahmeelement (24, 41) elektrische Energie aus den Energiespeicherelementen (15) bezieht, abhängig ist von dem Wert, mit dem der erste erfasste Ladungswert den Schwellwert übersteigt.

5. Akkumulator (8), insbesondere als Energieversorgung für eine Werkzeugmaschine (2), zur Durchführung des Verfahrens nach wenigstens einem der Ansprüche 1 bis 4, enthaltend ein Akku-Gehäuse (14), eine Akku-Schnittstelle (16), eine Speichereinheit (17), eine Steuereinheit (20) und eine Anzahl an Energiespeicherelementen (15), wobei die Steuereinheit (20) wenigstens eine Erfassungseinrichtung (18) zum Erfassen wenigstens eines Ladungswerts enthält.

6. Akkumulator (8) nach Anspruch 5,
**dadurch gekennzeichnet, dass** das wenigstens eine Energieaufnahmeelement (24, 41) in Form wenigstens eines Bauteils der Steuereinheit (20) des Akkumulators (8) verwirklicht ist.

7. Akkumulator (8) nach Anspruch 5,
**dadurch gekennzeichnet, dass** das wenigstens eine Energieaufnahmeelement (24, 41) in Form einer Signalausgabeeinrichtung (19b) des Akkumulators (8) verwirklicht ist.

8. Akkumulator (8) nach Anspruch 5,
**dadurch gekennzeichnet, dass** das wenigstens eine Energieaufnahmeelement (24, 41) in Form wenigstens elektrischen Widerstandselements (24a) verwirklicht ist.

9. Akkumulator (8) nach Anspruch 5,
**dadurch gekennzeichnet, dass** das wenigstens eine Energieaufnahmeelement (24, 41) in Form mindestens eines Bestandteils (24a, 24b) einer externen Vorrichtung (25), die wiederlösbar mit dem Akkumulator (8) verbunden werden kann, verwirklicht ist.

10. Akkumulator (8) nach wenigstens einem der Ansprüche 5 bis 9,
**dadurch gekennzeichnet, dass** die Eingabevorrichtung (19, 30, 34, 43) wenigstens teilweise in Form einer Benutzerschnittstelle an dem Akku-Gehäuse (14) verwirklicht ist.

11. Akkumulator (8) nach wenigstens einem der Ansprüche 5 bis 8,
**dadurch gekennzeichnet, dass** die Eingabevorrichtung (19, 30, 34, 43) wenigstens teilweise in Form einer drahtgebundenen oder drahtlosen Signalübertragungseinrichtung () verwirklicht ist.

12. Akkumulator (8) nach wenigstens einem der Ansprüche 5 bis 8,
**dadurch gekennzeichnet, dass** die Eingabevorrichtung (19, 30, 34, 43) wenigstens teilweise in Form einer mit dem Akkumulator (8) verbindbaren Ladereinrichtung (21) verwirklicht ist.

13. Akkumulator (8) nach wenigstens einem der Ansprüche 5 bis 8,
**dadurch gekennzeichnet, dass** die Eingabevorrichtung (19, 30, 34, 43) wenigstens teilweise in Form einer mit dem Akkumulator (8) verbindbaren Werkzeugmaschine (2) verwirklicht ist.

14. Akkumulator (8) nach wenigstens einem der Ansprüche 5 bis 8,
**dadurch gekennzeichnet, dass** die Eingabevorrichtung (19, 30, 34, 43) wenigstens teilweise in Form eines mit dem Akkumulator (8) verbindbaren Mobilgeräts (25) verwirklicht ist.

15. System (1) enthaltend einen Akkumulator (8) mit wenigstens einem Energiespeicherelement (15) und wenigstens einer Eingabevorrichtung (19, 30, 34, 43) zur Durchführung des Verfahrens nach wenigstens einem der Ansprüche 1 bis 4,
**dadurch gekennzeichnet, dass** wenigstens ein externes Energieaufnahmeelement (24, 41) zur Reduzierung des Ladezustands der Energiespeicherelemente (15) mit dem Akkumulator (8) verbindbar ist.
